# EUROPEAN PATENT SPECIFICATION

(11) **EP 2 540 646 B1**
(45) Date of publication and mention of the grant of the patent: **19.03.2014**
(21) Application number: 12174523.6
(22) Date of filing: 29.06.2012
(51) Int. Cl.: B65G 9/00, F16L 9/00

(54) **Multi-service modular line and trolley for said modular line**
Modularer Mehrzweck-Leitungsbausatz und Transportwagen für einen solchen Leitungsbausatz
Conduit modulaire multiservice et chariot pour un tel conduit

(30) Priority: 01.07.2011 IT TO20110582
(43) Date of publication of application: 02.01.2013
(73) Proprietor: Sicomat S.r.l., Mondovi' (IT)
(72) Inventor: Denegri, Carlo, 12084 MONDOVI (IT)
(74) Representative: Garavelli, Paolo

(56) References cited:
- DE-U1- 9 406 152
- DE-U1- 20 016 640
- DE-U1- 29 516 558
- FR-A1- 2 373 427

## Description

The present invention relates to a multi-service modular line according to the preamble of claim 1 and to a trolley according to the preamble of claim 6.

Known in the industrial sector is the use of modular lines configurable according to specific operational requirements to provide general services, such as power supply or the removal of fluids, normally pressurized fluids, and/or the supply of electrical energy or network signals, or also, fixed or movable support systems for various equipment or accessories in general.

The known modular lines comprise a monolithic profiled aluminum bar, which defines one or more ducts for the conveyance of fluids, one or more cable housing channels, and one or more attachment seats. Said attachment seats allow the connection, for example by screws, of additional external profiles separate from the bar and, in turn, defining supports or the runways for mobile trolleys outside of the same monolithic bar.

Although used, the known modular lines of the above type are still not yet fully satisfactory, both from the point of view of dimensions but, above all, for the fact that they require relatively high costs and relatively long assembly times, especially when the lines reach considerable lengths.

The foregoing is essentially attributable to the fact that in any case, in the known lines, at least two distinct section bars must be provided and must be firmly connected one to the other in order to avoid relative movements or stress concentrations. In some cases, and especially when movable trolleys are required, the section defining the runways of the same trolley must be suitably sized to result in high shape stability and is, however, provided with interruptions adapted to enable the insertion of the trolley/s. Such interruptions create discontinuities and/or stress concentrations that increase every time the line, for various reasons, must be modified or adapted to meet new operational or logistic requirements.
A trolley coupled in a sliding manner to an elongated bar and projecting outside the bar itself through a longitudinal passage is described, for example, in DE 295 16 558 U1. This document discloses a multi-service modular line as stated in the preamble of claim 1. Document FR 2373 427 A1 discloses a trolley as stated in the preamble of claim 6.
The purpose of the present invention is to provide a multi-service modular line, which allows to solve in an extremely simple and economic way the problems outlined above.

According to the present invention a multi-service modular line is provided, as claimed in Claim 1.
The present invention also relates to a trolley for a multi-service modular line.
According to the present invention a trolley is provided for a multi-service modular line as claimed in Claim 6.
The invention will now be described with reference to the accompanying drawings, which illustrate an example of nonlimiting embodiment, wherein:
Figure 1 shows partly in section a segment of a preferred embodiment of a modular line made in accordance with the dictates of the present invention;
Figure 2 is an exploded perspective view of the line of Figure 1; and
Figures 3 and 4 are two different perspective views of a trolley of figures 1 and 2 made in accordance to the dictates of the present invention.

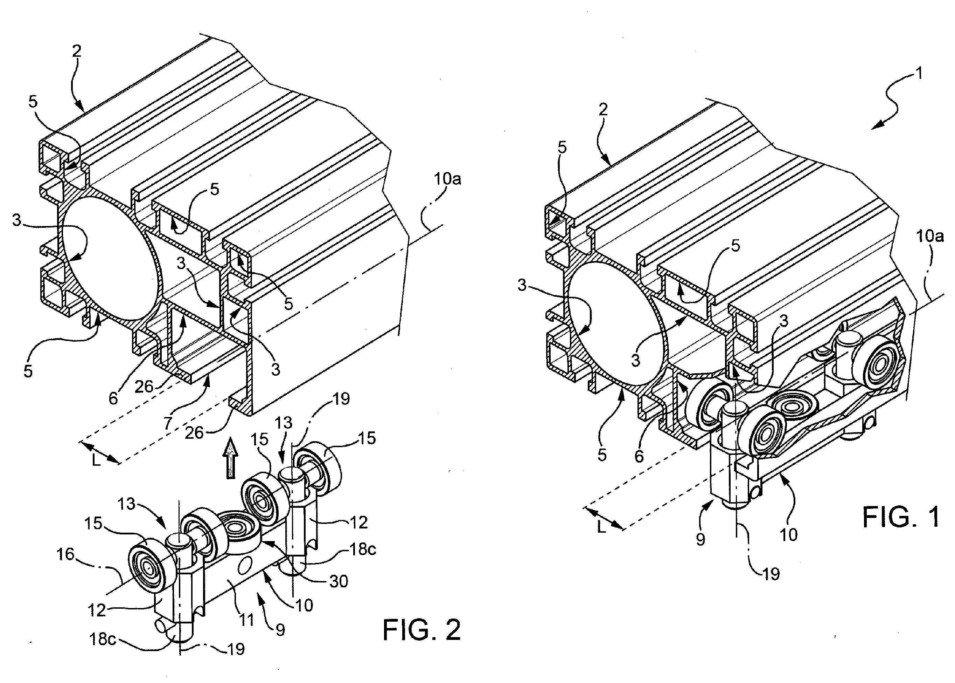

In figure 1, with 1 is indicated as a whole a multi-service modular line comprising a single monolithic hollow profiled bar 2.

The bar 2 is made of aluminum alloy and delimits a plurality of ducts 3 for the passage of the respective operative fluids, for example compressed air or oil or also a fluid under depression and a plurality of ducts/channels 5 for housing electrical cablings or network lines accessible or not from the outside.

The bar 2 delimits, in addition, a transit channel 6, which, in the particular example described, is formed on the outer periphery of the bar, communicates with the outside through a longitudinal side passage 7, facing, in use, downwards, and partially houses a support or fixing trolley 9 movable in a longitudinal direction 10a and projects outside of the bar 2 through the same passage 7.

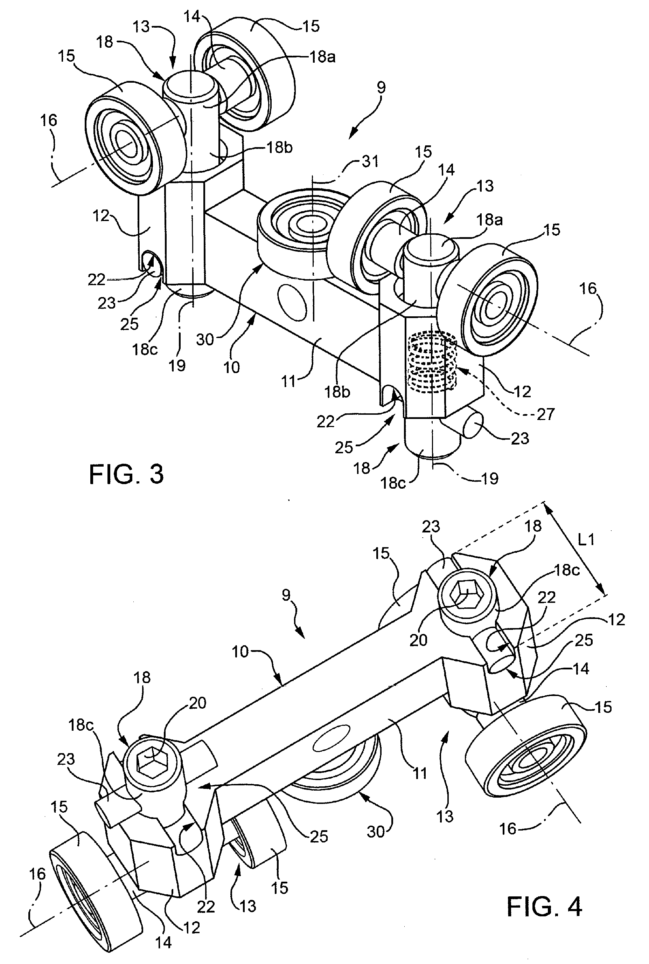

Again with reference to Figures 1 and 2 and with specific reference to Figures 3 and 4, the trolley 9 is a trolley configurable in order to be inserted at any point of the bar 2 or the channel 6 through the passage 7.

The trolley 9 comprises a frame 10 made of monolithic aluminum alloy and, in turn, comprising an intermediate longitudinal member 11 and two tubular end vertical segments 12, which, in the particular example described, have transverse dimensions L1 smaller than a width L of the passage 7 measured perpendicularly to the longitudinal direction 10a and extending partially within the channel 6 engaging with clearance the same passage 7.

To each of the end segments 12 is associated a respective axle 13 comprising a cross member 14 and respective wheels 15 coupled to the cross member 14 in a rotary manner about respective hinge axes 16 and presenting an outer diameter smaller than the width L of the passage 7. To each of the cross members 14 is integrally connected an end segment 18a of a hinge pin 18, which extends orthogonally to the relative axis 16 and also comprises an intermediate segment 18b extending within the respective segment 12 and an end segment 18c opposite to the segment 18a projecting outside of the respective segment 12. The segment 18b is coupled to the relative segment 12 in a rotary manner about a respective hinge axis 19 and axially sliding along the axis 19 itself, while the segment 18c is provided with a socket head seat 20 directly accessible from the outside.

Each of the segments 12 has, on the opposite side to the relative axle 13, an elongated seat 22 in a direction orthogonal to the relative hinge pin 18 and to the longitudinal member 11.

Each seat 22 is adapted to accommodate a peg 23 of angular retention, which constitutes, together with the seat 22, part of a device 25 for angular positioning of the relative axle 13 to selectively maintain the same relative axle 13 in an operative rolling position inside the channel 6 (Figure 1), and in an insertion position. When the axles 13 are arranged in their operating positions, the respective wheels 15 roll in contact with its relative runways defined by segments 26 of the bar 2 which laterally delimit the passage 7 (Figure 2) and the corresponding peg 23 engages the relative seat 22, while when they are arranged in their insertion positions, the respective pegs 23 extend outwardly of the respective segment 12 and, therefore, of the relative seat 22 and the axes 16 of the same axle 13 are aligned with each other, as shown in Figure 2.

Again with reference to Figures 3 and 4, each device 25 also comprises, for each hinge pin 18, a relative spring 27 (Fig. 3) housed inside the respective segment 12 and in a position surrounding the relative hinge pin 18. Each spring 27 allows controlled axial displacements of the relative hinge pin 18 with respect to the respective segment 12 and forces the corresponding peg 23 inside the respective seat 22 when the relative axle 13 is arranged in its operative position.

Again with reference to the attached figures, the trolley 9 also comprises a rolling body 30, conveniently constituted by a wheel equal to the wheels 15, which is hinged to the longitudinal member 11 between the segments 12 and is arranged on the same side of the axles 12 to rotate about a hinge axis 31 (Fig. 3) parallel to the rotation axes 19 of the hinge pins 18. When the axles 12 are arranged in their operative position, the body 30 engages the passage 7 and cooperates, in use, in a selectively rolling way with the segments 26 by guiding the trolley 9 during its longitudinal motion.

In use, when the availability of a movable trolley is necessary along the line 1, the trolley 9 is configured by placing both axles 13 in their insertion position, after which the same axles 13 are inserted into the channel 6 by fitting the wheels 15 and part of the segments 12 in the channel 6 itself through the passage 7. Once insertion is complete, acting from the outside, by way of a simple socket wrench, the axles 13 are rotated in one direction or the other until triggering the corresponding pegs 23 within the corresponding seats 22. At this point the trolley 9 is ready to move in the longitudinal direction 10a along with necessary hanging loads.

From the foregoing it is clear that the constructive characteristics of the line 1 and, in particular of the trolley 9, allow to provide the same services of the known lines but using a single monolithic bar.

Compared as usual with known solutions, the constructive characteristics of the trolley 9 allow to insert the trolley 9 at any moment and at any point of the line 1 without the need to disassemble the components and/or to provide specific points of insertion/removal of the trolleys.

From the foregoing it is clear that the line 1 described herein may be subject to modifications and variations without thereby departing from the protective scope defined by the independent claims. In particular, other than those indicated by way of example could be the number, the arrangement and the dimensions of the ducts 3 and the channels 5. Constructively different from the one indicated may be the trolley 9, which could then comprise a different number of wheels and a frame 10 made in several parts or with a different material. Different, finally, from the one indicated may be the device 25 for positioning and angular retention of the axles 13.

## Claims

1. A multi-service modular line (1) comprising an elongated hollow body (2) made of aluminium alloy and at least one trolley (9) borne by said elongated hollow body and mobile in a longitudinal direction (10a); said elongated hollow body comprising a single monolithic profiled bar defining at least one duct (3) for the passage of an operative fluid or of an electric cabling; said profiled bar also defining a channel (6) connected with the outside through a longitudinal side passage (7) and partially housing said trolley; the trolley projecting outside of said bar through said passage; **characterized in that** said trolley is configurable to be inserted at any point of said channel (6) through said passage, **in that** said passage has a dimension (L) measured orthogonally to said longitudinal direction (10a) approximating by excess at least the outer diameter of the wheels (15) of said trolley and **in that** said trolley comprises a frame (11, 12) having at least one portion extending through said passage (7) and having a dimension measured in a direction orthogonal to said longitudinal direction smaller than the dimension of said passage (7) measured in the same direction and two axles (13) having respective wheels (15) rotating about respective axes (16); both of said axles rotating with respect to said frame about relative hinge axes (19) between an operative rolling position in said channel and an insertion position in said channel when arranged in said insertion position, said axes (16) being aligned to one another and coaxial.

2. The line according to claim 1, **characterised in that** each of said axles bears, integrally connected, a respective hinge pin (18) orthogonal to said relative axis and coupled to said frame rotating about an axis (19) thereof; angular positioning means (22,23) being interposed between each of said hinge pin (18) and said frame.

3. The line according to claim 2, **characterised in that** said angular positioning means comprise an angular locking pin (23) extending orthogonally to said hinge pin, and a retaining seat (22) obtained on said frame and adapted to house a segment of said locking pin.

4. The line according to claim 3, **characterised in that** said hinge pins are mobile axially with respect to said frame and **in that** said angular positioning means comprise snap retaining elastic means (27) for said locking pin within said retaining seat.

5. The line according to any of the preceding claims, **characterised in that** said trolley comprises guide rolling means (30) borne by said frame and extending through said passage (7) to rollingly cooperate selectively with the longitudinal surfaces of the bar defining said passage (7).

6. A trolley (9) for a multi-service modular line comprising a single monolithic profiled bar (2) defining a sliding and guide channel (6) of said trolley and communicating with the outside through a longitudinal side passage (7); the trolley (9) comprising a frame (11,12) and two axles (13) having respective wheels (15) rotating about respective axes (16), **characterised in that** each of said wheels (15) has a diameter smaller than the width (L) of said passage (7) and **in that** both said axles rotate with respect to said frame between an operative position and an insertion position in said channel, in which the axes (16) of said axles are substantially aligned to one another.

7. The trolley according to claim 6, **characterised in that** each of said axles bears, integrally connected, a respective hinge pin (18) orthogonal to said relative axis and coupled to said frame rotating about an axis (19) thereof; angular positioning means (22,23) being interposed between each of said hinge pin and said frame to maintain said axle selectively in said operative and insertion position.

8. The trolley according to claim 7, **characterised by** also comprising directly externally actuatable actuator means (18,20) for rotating said axles between said operative and insertion positions.

9. The trolley according to claim 7 or 8, **characterised in that** said angular positioning means comprise an angular locking pin (23) extending orthogonally to said hinge pin (18), and a retaining seat (22) obtained on said frame and adapted to house a segment of said locking pin.

10. The trolley according to claim 9, **characterised in that** said hinge pins axially slide with respect to said frame and **in that** said angular positioning means also comprise snap retaining elastic means (27) for said locking pin within said retaining seat.

11. The trolley according to any of claims 6 to 10 **characterised by** also comprising guide rolling means (30) borne by said frame and adapted to extend through said passage (7) to rollingly cooperate with longitudinal surfaces of said monolithic bar defining said passage (7).

## Patentansprüche

1. Modulare Multi-Service-Linie (1) mit einem langen Hohlkörper (2), der aus einer Aluminiumlegierung hergestellt wird, und mindestens einem Wagen (9), der vom genannten langen und beweglichen Hohlkörper in eine Längsrichtung (10a) geführt wird; der genannte lange Hohlkörper enthält eine einzelne monolithische Profilstange, die mindestens eine Leitung (3) für den Durchfluss einer Betriebsflüssigkeit oder für die Durchführung einer elektrischen Verkabelung definiert; die genannte Profilstange definiert außerdem einen Kanal (6), der außen durch einen longitudinalen Seitendurchgang (7) verbunden wird und teilweise den genannten Wagen aufnimmt; der Wagen ragt außerhalb der genannten Stange durch den genannten Durchgang hervor; und ist **dadurch gekennzeichnet, dass** der genannte Wagen so konfiguriert werden kann, dass er in jedem Punkt des genannten Kanals (6) durch den genannten Durchgang eingesetzt werden kann, dadurch, dass der genannte Durchgang eine Abmessung (L) hat, die orthogonal zur genannten Längsrichtung (10a) gemessen wird, die mindestens den Näherungswert des Außendurchmessers der Räder (15) des genannten Wagens aufrundet, und dadurch, dass der genannte Wagen ein Gestell (11, 12) mit mindestens einem Teil einschließt, der sich durch den genannten Durchgang (7) ausdehnt, sowie eine Abmessung, die in einer orthogonalen Richtung zur genannten Längsrichtung gemessen wird, welche kleiner als die Abmessung des genannten Durchgangs (7) ist, und in der gleichen Richtung gemessen wird, und zwei Achsen (13) mit entsprechenden Rädern (15) hat, die sich um die entsprechenden Achsen (16) drehen; beide genannten Achsen drehen sich im Verhältnis zum genannten Rahmen um entsprechende Scharnierachsen (19) zwischen einer wirksamen Rollposition im genannten Kanal und einer Einsetzposition im genannten Kanal, wenn sie in der genannten Einsetzposition angeordnet sind, sind die Achsen (16) miteinander ausgerichtet und koaxial.

2. Linie gemäß Patentanspruch 1, die **dadurch gekennzeichnet ist, dass** jede der genannten Achsen integral verbunden einen entsprechenden Scharnierbolzen (18) trägt, der orthogonal zur entsprechenden genannten Achse ist und mit dem genannten Gestell verkoppelt ist, der sich um eine entsprechende Achse (19) dreht; Winkelpositionsvorrichtungen (22, 23) liegen zwischen jedem genannten Scharnierbolzen (18) und jedem genannten Gestell.

3. Linie gemäß Patentanspruch 2, die **dadurch gekennzeichnet ist, dass** die genannten Winkelpositionsvorrichtungen einen Winkelsperrbolzen (23) enthalten, der sich orthogonal am genannten Scharnierbolzen ausdehnt, sowie eine Rückhalteaufnahme (22), die am genannten Gestell erhalten wird und dazu dient, ein Segment des genannten Sperrbolzens aufzunehmen.

4. Linie gemäß Patentanspruch 3, die **dadurch gekennzeichnet ist, dass** die genannten Scharnierbolzen in axialer Richtung im Verhältnis zum genannten Gestell beweglich sind, und dadurch, dass die genannten Winkelpositionierungsvorrichtungen elastische Einrastrückhaltevorrichtungen (27) für den genannten Sperrbolzen in der genannten Rückhalteaufnahme haben.

5. Linie gemäß einem beliebigen der vorhergehenden Patentansprüche, die **dadurch gekennzeichnet ist, dass** der genannte Wagen Gleit- oder Rollvorrichtungen (30) enthält, die vom genannten Gestell getragen werden und sich durch den genannten Durchgang (7) ausdehnen, um rollend und selektiv mit den Längsflächen der Stange zusammenzuarbeiten, die den genannten Durchgang (7) definiert.

6. Wagen (9) für eine modulare Multi-Service-Linie mit einer einzelnen monolithischen Profilstange (2), die einen Gleit- und Führungskanal (6) des genannten Wagens definiert, und die mit dem Außenbereich durch einen longitudinalen Seitendurchgang (7) in Kommunikation tritt; der Wagen (9) schließt ein Gestell (11, 12) und zwei Achsen (13) mit entsprechenden Rädern (15) ein, die sich um die entsprechenden Achsen (16) drehen, und ist **dadurch gekennzeichnet, dass** jedes der genannten Räder (15) einen kleineren Durchmesser als die Breite (L) des genannten Durchgangs (7) hat, sowie dadurch, dass sich beide genannten Achsen um ein Gestell zwischen einer Betriebsposition und einer Einsetzposition im genannten Kanal drehen, in dem die Achsen (16) der genannten Achsen grundlegend miteinander ausgerichtet sind.

7. Wagen gemäß Patentanspruch 6, der **dadurch gekennzeichnet ist, dass** jede der genannten Achsen integral verbunden einen entsprechenden Scharnierbolzen (18) trägt, der orthogonal zur entsprechenden genannten Achse ist und mit dem genannten Gestell verkoppelt ist, der sich um eine entsprechende Achse (19) dreht; Winkelpositionsvorrichtungen (22, 23) liegen zwischen jedem genannten Scharnierbolzen und jedem genannten Gestell, um die genannte Achse selektiv in der genannten wirksamen Einsetzposition zu halten.

8. Wagen gemäß Patentanspruch 7, der **dadurch gekennzeichnet ist, dass** er außerdem Antriebsvorrichtungen (18, 20) enthält, die direkt von außen aktivierbar sind, um die genannten Achsen zwischen den genannten wirksamen Einsetzpositionen drehen zu lassen.

9. Wagen gemäß Patentanspruch 7 oder 8, der **dadurch gekennzeichnet ist, dass** die genannten Winkelpositionsvorrichtungen einen Winkelsperrbolzen (23) enthalten, der sich orthogonal am genannten Scharnierbolzen (18) in einer Rückhalteaufnahme (22) ausdehnt, die am genannten Gestell erhalten wird und dazu dient, ein Segment des genannten Sperrbolzens aufzunehmen.

10. Wagen gemäß Patentanspruch 9, der **dadurch gekennzeichnet ist, dass** die genannten Schamierbolzen in axialer Richtung im Verhältnis zum genannten Gestell gleiten, und dadurch, dass die genannten Winkelpositionierungsvorrichtungen außerdem elastische Einrastrückhaltevorrichtungen (27) für den genannten Sperrbolzen in der genannten Rückhalteaufnahme haben.

11. Wagen gemäß einem beliebigen der Patentansprüche 6 bis 10, der **dadurch gekennzeichnet ist, dass** er außerdem Gleit- oder Rollvorrichtungen (30) enthält, die vom genannten Gestell getragen werden und sich durch den genannten Durchgang (7) ausdehnen, um rollend mit den Längsflächen der genannten monolithischen Stange zusammenzuarbeiten, die den genannten Durchgang (7) definiert.

## Revendications

1. Ligne modulaire multiservices (1) comprenant un corps creux allongé (2) composé d'un alliage en aluminium et au moins un chariot (9) porté par le corps creux allongé et mobile dans une direction longitudinale (10a); ledit corps creux allongé comprenant une simple barre profilée monolithique qui définit au moins un conduit (3) pour le passage d'un fluide opératif ou d'un câblage électrique; ladite barre profilée en définissant en outre un canal (6) raccordé à l'extérieur à travers un passage latéral longitudinal (7) et qui accueille partiellement ledit chariot; le chariot en sortant à l'extérieur de ladite barre à travers ledit passage; **caractérisée par le fait que** ledit chariot est configurable de façon à être inséré dans un point quelconque dudit canal (6) à travers ledit passage, **par le fait que** ledit passage a une dimension (L) mesurée orthogonalement par rapport à ladite direction longitudinale (10a) qui avoisine par excès au moins le diamètre externe des roues (15) dudit chariot et **par le fait que** ledit chariot comprend un châssis (11, 12) ayant au moins une portion qui s'étend à travers ledit passage (7) et ayant une dimension mesurée dans une direction orthogonale a ladite direction longitudinale inférieure à la dimension dudit passage (7) mesurée dans la même direction et deux essieux (13) ayant des roues respectives (15) qui tournent autour des axes respectifs axes (16); les deux essieux en tournant par rapport audit châssis autour d'axes de charnière (19) relatifs entre une position de roulement opérative dans ledit canal et une position d'insertion dans ledit canal quand ils sont disposés dans ladite position d'insertion, lesdits axes (16) étant alignés l'un avec l'autre et coaxiaux.

2. Ligne selon la revendication 1, **caractérisée par le fait que** chacun desdits essieux porte, raccordé en mode intégral, un pivot de charnière respectif (18) orthogonal audit axe relatif et accouplé audit châssis qui tourne autour d'un axe (19) relatif; des moyens de positionnement angulaire (22, 23) étant interposés entre chacun entre ledit pivot de charnière (18) et ledit châssis.

3. Ligne selon la revendication 2, **caractérisée par le fait que** les dits moyens de positionnement angulaire comprennent un pivot de blocage angulaire (23) qui s'étend orthogonalement par rapport audit pivot de charnière, et un logement de retenue (22) obtenu sur ledit châssis et apte à loger un segment dudit pivot de blocage.

4. Ligne selon la revendication 3, **caractérisée par le fait que** les dits pivots de charnière sont mobiles en sens axial par rapport audit châssis et **par le fait que** les dits moyens de positionnement angulaire comprennent des moyens élastiques de retenue par déclic (27) pour ledit pivot de blocage à l'intérieur dudit logement de retenue.

5. Ligne selon une quelconque des revendications précédentes, **caractérisée par le fait que** ledit chariot comprend des moyens de roulement de conduite (30) portés par ledit châssis et qui s'étendent à travers ledit passage (7) pour coopérer en mode roulant et en mode sélectif avec les surfaces longitudinales de la barre qui définit ledit passage (7).

6. Chariot (9) pour une ligne modulaire multiservices comprenant une barre individuelle profilée monolithique (2) qui définit un canal de glissement et conduite (6) dudit chariot et que communique avec l'extérieur à travers un passage latéral longitudinal (7); le chariot (9) comprenant un châssis (11, 12) et deux essieux (13) ayant des roues respectives (15) qui tournent autour d'axes respectifs (16) **caractérisé par le fait que** chacune des dites roues (15) a un diamètre inférieur à la largeur (L) dudit passage (7) et **par le fait que** les dits essieux tournent par rapport à un châssis entre une position opérative et une position d'insertion dans ledit canal, dont les axes (16) desdits essieux sont substantiellement alignés l'un par rapport à l'autre.

7. Chariot selon la revendication 6, **caractérisé par le fait que** chacun de desdits essieux porte, raccordé en mode intégral, un pivot de charnière respectif (18) orthogonal audit axe relatif et accouplé audit châssis qui tourne autour d'un axe (19) relatif ; des moyens de positionnement angulaire (22, 23) étant interposés entre chacun entre ledit pivot de charnière et ledit châssis pour maintenir ledit essieu sélectivement dans ladite position opérative d'insertion.

8. Chariot selon la revendication 7, **caractérisé par** le fait de comprendre en outre des moyens actionneurs (18, 20) actionnables directement de l'extérieur pour faire tourner lesdits essieux entre lesdites positions opératives d'insertion.

9. Chariot selon la revendication 7 ou 8, **caractérisé par le fait que** les dits moyens de positionnement angulaire comprennent un pivot de blocage angulaire (23) qui s'étend orthogonalement par rapport audit pivot de charnière (18), dans un logement de retenue (22) obtenu sur ledit châssis et apte à loger un segment dudit pivot de blocage.

10. Chariot selon la revendication 9, **caractérisé par le fait que** les dits pivots de charnière coulissent en sens axial par rapport audit châssis et **par le fait que** les dits moyens de positionnement angulaire comprennent en outre des moyens élastiques de retenue par déclic (27) pour ledit pivot de blocage à l'intérieur dudit logement de retenue.

11. Chariot selon une quelconque des revendications de 6 à 10, **caractérisé par** le fait de comprendre en outre des moyens de roulement de conduite (30) portés par ledit châssis et aptes à s'étendre à travers ledit passage (7) pour coopérer en mode roulant avec des surfaces longitudinales de ladite barre monolithique qui définit ledit passage (7).
